(19) Europäisches Patentamt
European Patent Office
Office européen des brevets

(11) EP 2 036 931 A1

(12) **EUROPÄISCHE PATENTANMELDUNG**

(43) Veröffentlichungstag:
**18.03.2009 Patentblatt 2009/12**

(21) Anmeldenummer: **07116117.8**

(22) Anmeldetag: **11.09.2007**

(51) Int Cl.:
***C08G 18/12*** (2006.01) ***C08G 18/28*** (2006.01)
***C08G 18/48*** (2006.01) ***C08G 18/76*** (2006.01)
***C09J 175/00*** (2006.01)

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Sika Technology AG**
**6340 Baar (CH)**

(72) Erfinder:
- **Konstanzer, Martin**
**8048 Zürich (CH)**
- **Burckhardt, Urs Dr.**
**8049 Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(54) **Feuchtigkeitsreaktive Klebstoffzusammensetzungen mit sehr geringer Temperaturabhängigkeit des Schubmoduls**

(57) Die vorliegende Erfindung betrifft feuchtigkeitsreaktive Klebstoffzusammensetzungen, welche ein spezifisches Dialdimin der Formel (I) sowie ein bei Raumtemperatur flüssiges, Isocyanatgruppen aufweisendes Polyurethanpolymer **P1** umfassen und welche aufweisen. Diese Zusammensetzungen zeichnen sich durch eine sehr geringe Temperaturabhängigkeit des Schubmoduls aus, d.h. nach 7 Tagen Lagerung bei Raumtemperatur und 50% relativer Luftfeuchtigkeit weisen sie ein Verhältnis des bei -20°C gemessenen Schubmoduls zum bei 23°C gemessenen Schubmodul kleiner als 1.7 auf. Diese Klebstoffzusammensetzungen eignen sich insbesondere als Scheibenklebstoffe für Transportmittel.

EP 2 036 931 A1

## Beschreibung

### Technisches Gebiet

Die Erfindung betrifft das Gebiet der feuchtigkeitsreaktiven Klebstoffe, insbesondere der feuchtigkeitsreaktiven einkomponentigen Polyurethan-Scheibenklebstoffe.

### Stand der Technik

Feuchtigkeitsreaktive Klebstoffe sind schon lange im Gebrauch. Insbesondere feuchtigkeitsreaktive einkomponentige Polyurethanklebstoffe werden in industriellen Prozessen, wie im Fahrzeugbau, breit eingesetzt. Eine klassische Anwendung finden sie als Klebstoffe beim Einglasen von Fahrzeugen, d.h. beim Einkleben von Scheiben in die Fahrzeug-Karosserie.
Diese bekannten einkomponentigen Polyurethanklebstoffe weisen eine sehr markante Temperaturabhängigkeit des Schubmodules auf. Besonders markant ist der Abfall des Schubmoduls zwischen -20 ˚C und 23˚C. Der Klebstoff-Formulierer ist in seiner Formulierfreiheit vor allem durch den Wert des Tieftemperaturmoduls (-20˚C) des Klebstoffs nach oben begrenzt, um bei kalten Temperaturen einen Substratbruch zu verhindern. Im Verglasen ist das kritische Substrat Glas. Der kritische Wert des Schubmoduls liegt demzufolge für einen Scheibenklebstoff bei -20˚C bei etwa 6 MPa. Durch die starke Temperaturabhängigkeit bedingt sind jedoch derartige Klebstoffe bei hohen Temperaturen (bei 23˚C, insbesondere bei 80˚C) jedoch sehr tiefmodulig, was aber nachteilig für eine mechanische Beanspruchung des Klebverbundes bei höheren Temperaturen bei tiefen Temperaturen ist.

### Darstellung der Erfindung

Aufgabe der vorliegenden Erfindung ist es daher, Klebstoffe zur Verfügung zu stellen, welche eine möglichst geringe Temperaturabhängigkeit des Schubmoduls aufweisen.
Überraschenderweise hat sich gezeigt, dass eine feuchtigkeitsreaktive Klebstoffzusammensetzung gemäss Anspruch 1, eine sehr kleine Temperaturabhängigkeit des Moduls aufweisen. Damit sind Verklebungen ermöglicht, welche über einen breiten Temperaturbereich sehr ähnliche Module aufweisen, und somit einfacher berechenbar sind. Es ist nun zudem möglich, Klebstoffe zu formulieren, welche bei Raumtemperatur und/oder bei 80˚C sehr hohe Module aufweisen und trotzdem bei -20˚C lediglich ein Modul aufweisen, welches noch kein Risiko eines Substartbruches in sich birgt. Derartige Klebstoffe können sich nun auch bei diesen Temperaturen Schubmodulwerte aufweisen, welche nahe am Substratbruchwert liegen. Diese Möglichkeit erlaubt es nun, völlig neue Wege in der Gestaltung von Verklebungen zu beschreiten, welche bisher verschlossen waren.
Weitere Aspekte der Erfindung bilden die Verwendungen der feuchtigkeitsreaktiven Klebstoffzusammensetzung gemäss Anspruch 15 und 16 sowie ein verklebter Artikel gemäss Anspruch 18.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt feuchtigkeitsreaktive Klebstoffzusammensetzungen, welche

a) mindestens ein Dialdimin der Formel (I),

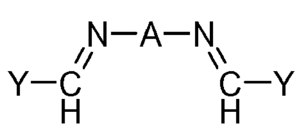

(I)

sowie
b) mindestens ein bei Raumtemperatur flüssiges, Isocyanatgruppen aufweisendes Polyurethanpolymer **P1** umfassen,

wobei A für einen zweiwertigen aliphatischen, cycloaliphatischen oder arylaliphatischen Kohlenwasserstoffrest mit 2 bis 15 C-Atomen steht, und Y für den Rest eines Aldehyds nach Entfernung einer O=CH-Gruppe steht;

Die Klebstoffzusammensetzungen weisen zudem nach 7 Tagen Lagerung bei Raumtemperatur und 50% relativer Luftfeuchtigkeit ein Verhältnis des bei -20°C gemessenen Schubmoduls zum bei 23°C gemessenen Schubmodul kleiner als 1.7, insbesondere kleiner als 1.5, bevorzugt kleiner als 1.4, auf, wobei die Schubmodule bei den angegebenen Temperaturen nach DIN 54 451 gemessen wurden.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "cycloaliphatisches primäres Diamin" bezeichnet hier und im Folgenden ein Diamin, welches zwei primäre Aminogruppen aufweist, die an einen Kohlenwasserstoffrest gebunden sind, welcher cycloaliphatisch ist oder cycloaliphatische Anteile aufweist.

Der Begriff "primäre Aminogruppe" bezeichnet im vorliegenden Dokument eine $NH_2$-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Als "Raumtemperatur" wird 23°C bezeichnet.

Als "Offenzeit" wird in diesem Dokument die Zeit bezeichnet, während der die Zusammensetzung verarbeitet werden kann, nachdem die Isocyanatgruppen des Polyisocyanats mit Wasser in Kontakt gekommen sind.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen längeren Zeitraum lagerstabil ist, sich also in ihren Anwendungs- oder Gebrauchseigenschaften durch die Lagerung nicht oder nur unwesentlich verändert, und welche nach der Applikation durch die Einwirkung von Feuchtigkeit und / oder Wärme aushärtet.

Ein "Klebstoff", bzw. eine "Klebstoffzusammensetzung", weist in diesem Dokument nach 7 Tagen Lagerung bei Raumtemperatur und 50% relativer Luftfeuchtigkeit, ein Schubmodul bei 23°C, gemessen nach DIN 54 451, von mehr als 1 MPa auf, und grenzt sich somit von einem ein "Dichtstoff", bzw. einer "Dichtstoffzusammensetzung", welcher oder welche ein Schubmodul bei 23°C, gemessen nach DIN 54 451 solches von maximal 1 MPa aufweist.

Gestrichelte Linien in Formeln in diesem Dokument stellen jeweils die Bindung zwischen einem Substituenten und dem zugehörigen Molekülrest dar.

Die Klebstoffzusammensetzung enthält mindestens ein Dialdimin der Formel (I). Besonders bevorzugte Dialdimine der Formel (I) sind solche, deren α-Kohlenstoff zur Imino-Gruppe keine Wasserstoffatome aufweisen, d.h. insbesondere Dialdimine, bei denen der Rest Y die Formel (II a) oder (II b) aufweist,

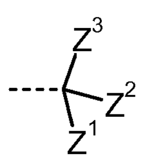

(II a)

--- $Z^4$ (II b)

wobei

$Z^1$ und $Z^2$ entweder
unabhängig voneinander jeweils für einen einwertigen Kohlenwasserstoffrest mit 1 bis 12 C-Atomen stehen,
oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen; und
$Z^3$ entweder
für eine verzweigte oder unverzweigte Alkyl-, Cycloalkyl-, Alkylen- oder Cycloalkylengruppe steht,
oder für eine substituierte oder unsubstituierte Aryl- oder Arylalkylgruppe steht,
oder für einen Rest der Formel O-$R^2$ oder

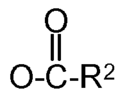 oder 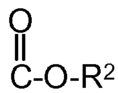

oder

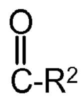

steht, wobei $R^2$
für eine Aryl-, Arylalkyl- oder Alkylgruppe steht und jeweils substituiert oder unsubstituiert ist, insbesondere für eine Aryl-, Arylalkyl- oder Alkylgruppe mit 1 bis 32 C-Atomen, welche, gegebenenfalls Ethersauerstoffatome enthält, steht, oder für einen Rest der Formel (VI) steht,

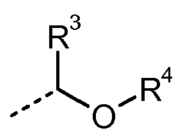 (VI)

wobei
$R^3$ für ein Wasserstoffatom oder für eine Alkyl- oder Arylalkylgruppe, bevorzugt für ein Wasserstoffatom, steht, und
$R^4$ entweder
für einen Kohlenwasserstoffrest mit 1 bis 30 C-Atomen, der gegebenenfalls Ethersauerstoffatome enthält, steht, oder für einen Rest

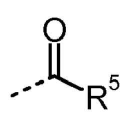

steht, wobei $R^5$ für ein Wasserstoffatom oder für einen Kohlenwasserstoffrest mit 1 bis 20, insbesondere 1 bis 5, C-Atomen steht;
und wobei
$Z^4$ entweder
für eine substituierte oder unsubstituierte Aryl- oder Heteroaryl-Gruppe, welche eine Ringgrösse von 5 bis 8, bevorzugt 6, Atomen aufweist, steht,
oder für

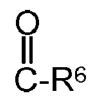

steht, wobei $R^6$

für ein Wasserstoffatom oder für eine Alkoxygruppe steht, oder für eine substituierte oder unsubstituierte Alkenyl- oder Arylalkenylgruppe mit mindestens 6 C-Atomen steht.

Ein Dialdimin (I) lässt sich aus mindestens einem Diamin der Formel (III) und mindestens einem Aldehyd der Formel (IV), insbesondere mindestens einem Aldehyd der Formel (IV a) oder (IV b), herstellen.

$$H_2N\text{-}A\text{-}NH_2 \qquad \text{(III)}$$

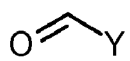 (IV)

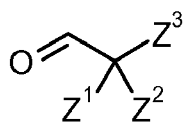 (IV a)

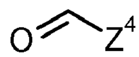 (IV b)

Die Umsetzung zwischen mindestens einem Diamin der Formel (III) und mindestens einem Aldehyd der Formel (IV) oder (IV a) oder (IV b) erfolgt in einer Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73ff. Der Aldehyd wird hierbei in Bezug auf die primären Aminogruppen des Amins stöchiometrisch oder in stöchiometrischem Überschuss eingesetzt. Üblicherweise werden solche Kondensationsreaktionen in Anwesenheit eines Lösemittels durchgeführt, mittels welchem das bei der Reaktion entstehende Wasser azeotrop entfernt wird.

Als Aldehyd geeignet sind zum einen Aldehyde der Formel (IV) wie beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd.

Als Aldehyd geeignet sind zum anderen Aldehyde der Formel (IV b), wie beispielsweise aromatische Aldehyde, wie Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7-und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Insbesondere geeignete Aldehyde sind die sogenannten tertiären Aldehyde, das heisst Aldehyde der Formel (IV a), welche in $\alpha$-Stellung zur Carbonylgruppe kein Wasserstoffatom aufweisen.

Geeignete Aldehyde der Formel (IV a) sind beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal. Weiterhin geeignete Aldehyde der Formel (IV a) sind Aldehyde der Formel (V).

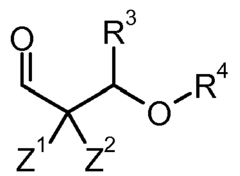

(V)

In Formel (V) weisen $Z^1$, $Z^2$, $R^3$ und $R^4$ die bereits genannten Bedeutungen auf.
Bevorzugt stehen in Formel (V) $Z^1$ und $Z^2$ für je eine Methylgruppe und $R^3$ für ein Wasserstoffatom.

Ein besonders geeigneter Aldehyd der Formel (V) ist in einer Ausführungsform ein Aldehyd **ALD1** der Formel (V a),

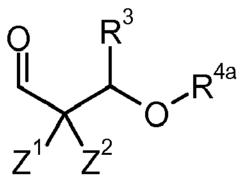

(V a)

wobei $R^{4a}$ für einen Kohlenwasserstoffrest mit 1 bis 30 C-Atomen, insbesondere 11 bis 30 C-Atomen, der gegebenenfalls Ethersauerstoffatome enthält, steht. In Formel (V a) weisen $Z^1$, $Z^2$ und $R^3$ die bereits genannten Bedeutungen auf.

Die Aldehyde **ALD1** der Formel (V a) stellen Ether von aliphatischen, cycloaliphatischen oder arylaliphatischen 2,2-disubstituierten 3-Hydroxyaldehyden mit Alkoholen oder Phenolen der Formel $R^{4a}$-OH dar, beispielsweise Fettalkoholen oder Phenolen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Beispiele geeigneter 2,2-disubstituierter 3-Hydroxyaldehyde sind 2,2-Dimethyl-3-hydr-oxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal.
Als Beispiele solcher Aldehyde **ALD1** der Formel (V a) genannt sind 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Ein besonders geeigneter Aldehyd der Formel (V) ist in einer weiteren Ausführungsform ein Aldehyd ALD2 der Formel (V b),

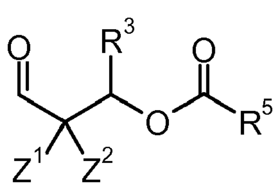

(V b)

In Formel (V b) weisen $Z^1$, $Z^2$, $R^3$ und $R^5$ die bereits genannten Bedeutungen auf.
wobei $R^5$ für ein Wasserstoffatom oder für einen Kohlenwasserstoffrest mit 1 bis 20, insbesondere 1 bis 5, C-Atomen steht.

Die Aldehyde **ALD2** der Formel (V b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxalde-hyd, 2-Hydroxymethyl-2-methyl-3-phenyl-propanal, 3-Hydroxy-2-methyl-2-phenyl-propanal und 3-Hydroxy-2,2-diphenyl-propanal, mit Carbonsäuren wie Ameisensäure, Essigsäure, Propionsäure, Buttersäure, Isobuttersäure, Valeriansäure und Capronsäure.
Als Beispiele solcher Aldehyde **ALD2** der Formel (V b) genannt sind 2,2-Dimethyl-3-formyloxy-propanal, 3-Acetoxy-2,2-dimethylpropanal, 2,2-Dimethyl-3-propionoxypropanal, 3-Butyroxy-2,2-dimethyl-propanal, 2,2-Dimethyl-3-isobutyroxy-propanal, 2,2-Dimethyl-3-pentoyloxy-propanal und 2,2-Dimethyl-3-hexoyloxy-propanal.

Bevorzugte Aldehyde sind die Aldehyde der Formel (IV a) und der Formel (IV b).
Insbesondere bevorzugt sind die Aldehyde der Formel (V).
Am meisten bevorzugt sind die Aldehyde ALD2 der Formel (V b), insbesondere 3-Acetoxy-2,2-dimethylpropanal.

Beispiele für geeignete primäre aliphatische Diamine der Formel (III) sind aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan, Bis-(4-amino-3-methylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0$^{2,6}$]decan, 1,4-Diamino-2,2,6-trimethylcyclohexan(TMCDA) sowie 1,3- und 1,4-Xylylendiamin.

Als Diamine bevorzugt sind symmetrische Diamine. Als "symmetrische Diamine" werden im vorliegenden Dokument Diamine der Formel (III) bezeichnet, in welchen die beiden primären Aminogruppen symmetrie-äquivalent sind, d.h. durch eine Symmetrieoperation, beispielsweise eine Drehung oder eine Spiegelung, ineinander übergeführt werden können.
Bevorzugte symmetrische Diamine der Formel (III) sind ausgewählt aus der Gruppe bestehend aus Ethylendiamin, 1,3-Propandiamin, 1,4-Butandiamin, 1,5-Pentandiamin, 1,6-Hexandiamin, 1,8-Octandiamin, 1,10-Decandiamin, 1,12-Dodecandiamin, 1,3- und 1,4-Diaminocyclohexan, Bis-(4-aminocyclohexyl)-methan, 1,3- und 1,4-Bis-(aminomethyl)cyclohexan sowie 1,3- und 1,4-Xylylendiamin.
Besonders bevorzugte symmetrische Diamine der Formel (III) sind ausgewählt aus der Gruppe bestehend aus Ethylendiamin, 1,6-Hexandiamin, 1,12-Dodecandiamin, 1,4-Diaminocyclohexan, Bis-(4-aminocyclohexyl)-methan, 1,3-Bis-(aminomethyl)cyclohexan sowie 1,3-Xylylendiamin.
Als symmetrisches Diamin der Formel (III) am meisten bevorzugt ist 1,6-Hexandiamin.
Der Rest A im Dialdimin der Formel (I) entspricht dem Diamin der Formel (III) nach Entfernung der zwei Aminogruppen.

Die Klebstoffzusammensetzung enthält weiterhin mindestens ein bei Raumtemperatur flüssiges, Isocyanatgruppen aufweisendes Polyurethanpolymer **P1.**
Ein geeignetes Isocyanatgruppen aufweisendes Polyurethanpolymer **P1** ist erhältlich durch die Umsetzung von mindestens einem Polyol mit mindestens einem Polyisocyanat.

Als Polyole für die Herstellung eines Polyurethanpolymers P1 können beispielsweise die folgenden Polyole oder Mischungen davon eingesetzt werden:

- Polyetherpolyole, auch Polyoxyalkylenpolyole oder Oligoetherole genannt, welche Polymerisationsprodukte von Ethylenoxid, 1,2-Propylenoxid, 1,2-oder 2,3-Butylenoxid, Tetrahydrofuran oder Mischungen davon sind, eventuell polymerisiert mit Hilfe eines Startermoleküls wie beispielsweise Wasser, Ammoniak, 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
  Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.
  Besonders geeignet sind Polyoxypropylendiole und -triole mit einem Ungesättigtheitsgrad tiefer als 0.02 mEq/g und

einem Molekulargewicht im Bereich von 1000 bis 30'000 g/mol, sowie Polyoxypropylendiole und -triole mit einem Molekulargewicht von 400 bis 8'000 g/mol. Unter ‚Molekulargewicht' oder 'Molgewicht' versteht man im vorliegenden Dokument stets das Molekulargewichtsmittel $M_n$. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim® von Bayer vertrieben.
Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
  Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
  Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, wie Dimethylcarbonat, Diarylcarbonaten, wie Diphenylcarbonat, oder Phosgen zugänglich sind.
  Besonders geeignet sind Polycarbonatdiole.
- Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen-oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylnitril, Vinylchlorid, Vinylacetat, Vinylalkohol, Isobutylen und Isopren, beispielsweise polyhydroxyfunktionelle Acrylnitril/Butadien-Copolymere, welche zum Beispiel aus carboxylterminierten Acrylnitril/Butadien-Copolymeren (kommerziell erhältlich unter dem Namen Hycar® CTBN von Noveon) und Epoxiden oder Aminoalkoholen herstellbar sind; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole wie beispielsweise Dimerfettsäurediole, 1,1,1-Trimethylolethan, 1,1,1-Trimethylolpropan, Glycerin, Pentaerythrit, niedrigmolekulare Alkoxylierungsprodukte der vorgenannten zwei- und mehrwertigen Alkohole, sowie Mischungen der vorgenannten Alkohole bei der Herstellung eines Polyurethanpolymers **P1** mitverwendet werden.

Als Polyisocyanate für die Herstellung eines Polyurethanpolymers **P1** können aliphatische, cycloaliphatische oder aromatische Polyisocyanate, insbesondere Diisocyanate, verwendet werden, beispielsweise die monomeren Diisocyanate, welche bereits als geeignete Polyisocyanate **PI** erwähnt wurden, sowie Oligomere und Polymere dieser monomeren Diisocyanate, sowie beiliebige Mischungen dieser Isocyanate. Bevorzugt sind monomere Diisocyanate, insbesondere MDI, TDI, HDI und IPDI.

Die Herstellung eines Polyurethanpolymers **P1** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer **P1** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 10, insbesondere 1.5 bis 5.

Das Polyurethanpolymer **P1** weist ein Molekulargewicht von vorzugsweise über 500 g/mol, insbesondere ein solches zwischen 1000 und 30'000 g/mol, auf.

Weiterhin weist das Polyurethanpolymer **P1** bevorzugt eine mittlere NCO-Funktionalität im Bereich von 1.8 bis 3 auf.

Als Polyisocyanat **P** geeignet sind schliesslich auch Gemische enthaltend ein Polyurethanpolymer **P1** und ein Polyisocyanat **PI,** insbesondere Gemische enthaltend ein MDI-basiertes Polyurethanpolymer **P1** und monomeres und/oder polymeres MDI, sowie weiterhin Gemische enthaltend ein IPDIbasiertes Polyurethanpolymer **P1** und monomeres und/oder oligomeres IPDI.

Als besonders geeignet hat sich gezeigt, wenn die Klebstoffzusammensetzung mehrere Polyurethanpolymere **P1** aufweist, wobei vorzugsweise eines auf einem Polyol mit einem Molekulargewicht unter 2000 g/mol basiert. Als besonders vorteilhaft hat sich die Kombination eines auf Polyetherpolyol basierenden Polyurethanpolymers **P1,** und eines auf Polycarbonatpolyol basierenden Polyurethanpolymers **P1**erwiesen.

Andererseits hat sich gezeigt, dass es besonders vorteilhaft ist, mindestens ein bei Raumtemperatur flüssiges, Isocyanatgruppen aufweisendes Polyurethanpolymer **P1** mit mindestens einem bei Raumtemperatur festen Isocyanatgruppen aufweisenden Polyurethanpolymer **P2** zu kombinieren. Bei Raumtemperatur feste, Isocyanatgruppen aufweisenden Polyurethanpolymere **P2** können aus den Polyolen und Polyisocyanaten hergestellt werden, welche bereits bei der Herstellung der Polyurethanpolymeren **P1** beschrieben worden sind. Besonders bevorzugt als Polyurethanpolymer **P2** sind bei Raumtemperatur feste Polyurethanpolymere, welche Isocyanatgruppen aufweisen und aus Polyesterpolyolen und/oder Polycarbonatpolyolen hergestellt werden.

Es hat sich gezeigt, dass es besonderes vorteilhaft ist, wenn die feuchtigkeitsreaktive Klebstoffzusammensetzung anorganische und organische Füllstoffe enthält. Als Beispiel für derartige Füllstoffe sind gemahlene oder gefällte Calciumcarbonate, welche gegebenenfalls mit Fettsäuren, insbesondere Stearaten, beschichtet sind, Baryt ($BaSO_4$, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln.

Meist bevorzugte Füllstoffe sind Russe, calcinierte Kaoline und Kreiden sowie deren Mischungen untereinander.

Der Gesamtmenge an Füllstoffen liegt vorzugsweise zwischen 25 und 55, insbesondere 30 - 45, Gew.-%, bezogen auf die feuchtigkeitsreaktive Klebstoffzusammensetzung. Meist bevorzugt enthält die feuchtigkeitsreaktive Klebstoffzusammensetzung 10 - 35 Gew.-% Russ.

Die feuchtigkeitsreaktive Klebstoffzusammensetzung enthält gegebenenfalls weitere Bestandteile, insbesondere in Polyurethanzusammensetzungen üblicherweise eingesetzte Hilfs- und Zusatzstoffe, wie beispielsweise die folgenden:

- Weichmacher, beispielsweise Carbonsäureester wie Phthalate, beispielsweise Dioctylphthalat, Diisononylphthalat oder Diisodecylphthalat, Adipate, beispielsweise Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-$\alpha$-Olefine (APAO);

- Lösemittel;
- Fasern, beispielsweise aus Polyethylen;
- Pigmente, beispielsweise Titandioxid oder Eisenoxide;
- Katalysatoren, welche die Hydrolyse der Aldiminogruppen beschleunigen, insbesondere Säuren, beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester;
- Katalysatoren, welche die Reaktion der Isocyanatgruppen beschleunigen, beispielsweise Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismut-tris(neodecanoat), und tertiäre Aminogruppen enthaltende Verbindungen wie 2,2'-Dimorpholinodiethylether und 1,4-Diazabicyclo[2.2.2]octan;
- Rheologie-Modifizierer wie beispielsweise Verdickungsmittel oder Thixotropiermittel, zum Beispiel Harnstoffverbindungen, Polyamidwachse, Bentonite oder pyrogene Kieselsäuren;
- Reaktivverdünner und Vernetzer, beispielsweise monomere Diisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, sowie Oligomere und Derivate dieser Polyisocyanate, insbesondere in Form von Isocyanuraten, Carbodiimiden, Uretoniminen, Biureten, Allophanaten oder Iminooxadiazindionen, Addukte monomerer Polyisocyanate mit kurzkettigen Polyolen, sowie Adipinsäuredihydrazid und andere Dihydrazide, sowie Polyisocyanate mit blockierten aromatischen Isocyanatgruppen, wie beispielsweise die Desmocap®-Typen 11, 12 und XP 2540 (alle von Bayer) und die Trixene®-Typen BI 7641, BI 7642, BI 7770, BI 7771, BI 7772, BI 7774 und BI 7779 (alle von Baxenden);
- blockierte Amine, beispielsweise in Form von Ketiminen, Oxazolidinen, Enaminen oder anderen Aldiminen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in $\alpha$-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth) acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz solcher weiteren Bestandteile darauf zu achten, dass diese die Lagerstabilität der Zusammensetzung nicht stark beeinträchtigen. Das heisst, dass diese Bestandteile während der Lagerung die zur Vernetzung führenden Reaktionen, wie Hydrolyse der Aldiminogruppen oder Vernetzung der Isocyanatgruppen, nicht in signifikantem Ausmass auslösen dürfen. Insbesondere bedeutet dies, dass all diese Bestandteile kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die einkomponentige feuchtigkeitsreaktive Zusammensetzung mindestens einen Katalysator. Der Katalysator ist insbesondere eine der genannten Säuren, wie Benzoesäure oder Salicylsäure, oder eine der genannten Metallverbindungen, oder eines der genannten tertiären Amine. Es kann durchaus vorteilhaft sein, unterschiedliche Katalysatoren, bzw. unterschiedliche Katalysatorenarten, einzusetzen.

Die einkomponentige feuchtigkeitsreaktive Zusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Eimer, einem Beutel, einer Kartusche oder einer Flasche über einen Zeitraum von beispielsweise mehreren Monaten aufbewahrt werden, ohne dass sie sich in ihren Anwendungseigenschaften oder in ihren Eigenschaften nach der Aushärtung in einem für ihren Gebrauch relevanten Ausmass verändert. Je nach Konsistenz der Zusammensetzung ist es üblich, die Lagerstabilität über die Messung der Viskosität zu ermitteln.

Die Aldiminogruppen des Aldimins der Formel (I) haben die Eigenschaft, bei Kontakt mit Feuchtigkeit zu hydrolysieren. Die dabei formal frei werdenden primären Aminogruppen reagieren dabei mit den in der Zusammensetzung vorhandenen Isocyanatgruppen zu Harnstoffgruppen, und es wird der entsprechende Aldehyd der Formel Y-CHO freigesetzt. Im Verhältnis zu den Aldiminogruppen überschüssige Isocyanatgruppen reagieren direkt mit Feuchtigkeit und bilden ebenfalls Harnstoffgruppen. Gegebenenfalls vorhandene blockierte Isocyanatgruppen reagieren im Allgemeinen unter Freisetzung des Blockierungsmittels ebenfalls zu Harnstoffgruppen, wobei diese Reaktion gegebenenfalls erst unter Einwirkung von Hitze abläuft. Als Ergebnis dieser Reaktionen härtet die Zusammensetzung zu einem festen

Material aus; dieser Prozess wird auch als Vernetzung bezeichnet. Die Reaktion der Isocyanatgruppen mit dem hydrolysierenden Aldimin muss dabei nicht notwendigerweise über freie Aminogruppen erfolgen. Selbstverständlich sind auch Reaktionen mit Zwischenstufen der Hydrolysereaktion möglich. Beispielsweise ist es denkbar, dass eine hydrolysierende Aldiminogruppe in der Form eines Halbaminals direkt mit einer Isocyanatgruppe reagiert.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Besprühen, oder es kann der Zusammensetzung bei der Applikation eine Wasser enthaltende Komponente zugesetzt werden.

Die einkomponentige feuchtigkeitsreaktive Zusammensetzung härtet bei Kontakt mit Feuchtigkeit im Allgemeinen ohne die Bildung von Blasen aus. Die Aushärtungsgeschwindigkeit lässt sich über die Art und Menge eines oder mehrerer gegebenenfalls vorhandener Katalysatoren, über die bei der Aushärtung herrschende Temperatur sowie über die Luftfeuchtigkeit bzw. die Menge zugesetzten Wassers beeinflussen.

Als Ergebnis dieser Reaktionen mit Wasser, insbesondere in der Formel von Luftfeuchtigkeit, vernetzt die Zusammensetzung und härtet schliesslich zu einem festen Material aus.

Der Anteil des Dialdimines der Formel (I) in der Zusammensetzung ist in der Zusammensetzung insbesondere derart bemessen, dass das Verhältnis der Anzahl Aldimino-Gruppen zur Anzahl der NCO-Gruppen in der Zusammensetzung 0.5 - < 1, bevorzugt mindestens 0.6 - 0.8, meist bevorzugt 0.65 - 0.75, beträgt.

Es hat sich gezeigt, dass die das Vorhandensein des Dialdimins der Formel (I) wesentlich dafür verantwortlich ist, dass eine Temperaturunabhängigkeit, bzw. eine Reduktion der Temperaturabhängigkeit, des Schubmodul erfolgt. Somit ist es ein weiterer Aspekt der Erfindung, dass das Dialdimin der Formel (I), wie es vorgängig beschrieben wurde, zur Reduktion der Temperaturabhängigkeit des Schubmoduls gemäss DIN 54 451 von feuchtigkeitsreaktiven Polyurethanklebstoffen verwendet werden kann.

Dank der vorliegenden Erfindung ist es ermöglicht, dass der Schubmodul des Klebstoffs bei erhöhten Temperaturen (z. B. bei Raumtemperatur oder bei 80˚C) stark erhöht werden kann. Die maximale Erhöhung orientiert sich jedoch in der Praxis daran, dass der Modul des Klebstoffs im erwarteten Temperaturverwendungsbereich denjenigen der zu verklebenden Materialien annähert, aber nicht überschreitet.

Grundsätzlich können verschiedenste Substrate **S1** und **S2** mittels der beschriebenen feuchtigkeitsreaktiven Klebstoffzusammensetzung verklebt werden, wobei die Substrate **S1** und **S2** gleich oder verschieden voneinander sein können. Beispielsweise sind geeignete Substrate **S1** und/oder **S2** anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Leder, Stoffe, Papier, Holz, mit Harz gebundene Holzwerkstoffe, Harz-Texil-Compositewerkstoffe, Kunststoffe wie Polyvinylchlorid (Hart- und Weich-PVC), Acrylonitril-Butadien-Styrol-Copolymere (ABS), SMC (Sheet Moulding Composites), Polycarbonat (PC), Polyamid (PA), Polyester, PMMA, Polyester, Epoxidharze, Polyurethane (PUR), Polyoxymethylen (POM), Polyolefine (PO), insbesondere mittels Plasma, Corona oder Flammen oberflächenbehandeltes Polyethylen (PE) oder Polypropylen (PP), Ethylen/Propylen-Copolymere (EPM) und Ethylen/Propylen-Dien-Terpolymere (EPDM); beschichtete Substrate wie pulverbeschichtete Metalle oder Legierungen; sowie Farben und Lacke, insbesondere Automobillacke.

Die beschriebene feuchtigkeitsreaktive Klebstoffzusammensetzung kann jedoch insbesondere gut verwendet werden bei der Verklebung von Scheiben im Transportmittelbau, insbesondere im Automobilbau. Infolge der Kombination der zu verklebenden Materialien, d.h. Glasscheibe und Metall, bzw. lackiertem Metall, ist es von grossem Vorteil, dass der Schubmodul des Klebstoffs sich im gesamten Temperaturbereich, d.h. von -20˚C bis 80 ˚C, an 6 MPa (gemessen nach DIN 54 451) annähert, aber diesen Wert nicht überschreitet.

Das Einglasen von Scheiben in Transportmittel erfolgt in einer an und für sich bekannten Art und Weise. In einer üblichen Variante wird der Klebstoff auf die Scheibe, typischerweise auf die im Randbereich der Scheibe vorhandene Glaskeramik, aufgetragen und anschliessend innerhalb der Offenzeit des Klebstoffs mit der Karosserie des Transportmittels, insbesondere eines Metallflansches, welcher typischerweise lackiert ist, gefügt. In einer weiteren Variante wird der Klebstoff auf die Karosserie des Transportmittels, insbesondere auf einen Metallflansch, welcher typischerweise lackiert ist, aufgetragen und dann innerhalb der Offenzeit des Klebstoffs mit der Scheibe, typischerweise auf die im Randbereich der Scheibe vorhandene Glaskeramik, gefügt.

Die Substrate können bei Bedarf vor dem Applizieren der Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Somit bildet ein weiterer Aspekt der Erfindung ein verklebter Artikel, welcher durch ein Verkleben von zwei Substraten **S1** und **S2** durch eine vorgängig beschriebene feuchtigkeitsreaktive Klebstoffzusammensetzung und der Härtung der Klebstoffzusammensetzung durch Feuchtigkeit erhalten wird.

Insbesondere ist der Artikel derart, dass das Substrat **S1** eine Scheibe, insbesondere eine Glasscheibe, und das Substrat **S2** ein Metall, insbesondere ein lackiertes Metall, ist.

Es zeigt sich, dass die feuchtigkeitsreaktive Klebstoffzusammensetzung blasenfrei aushärtet, gute mechanische Werte erzielt und über eine schnelle Durchhärtung verfügt. Weiterhin lassen sich gute Haftung auf diversen Untergründen, insbesondere Glas, Keramik, Metall und Lack erzielen.

**Beispiele**

Beschreibung der Messmethoden

Der **Amingehalt** der hergestellten Dialdimine, das heisst der Gehalt an blockierten Aminogruppen in Form von Aldiminogruppen, wurde titrimetrisch bestimmt (mit 0.1N $HClO_4$ in Eisessig, gegen Kristallviolett) und ist stets angegeben in mmol N/g.

a) Herstellung von Dialdiminen

**Dialdimin *A-1***

In einem Rundkolben wurden unter Stickstoffatmosphäre 50.9 g (0.18 mol) 2,2-Dimethyl-3-lauroyloxy-propanal vorgelegt. Unter kräftigem Rühren wurden aus einem beheizten Eintropftrichter 10.0 g (0.17 mol N) 1,6-Hexandiamin (BASF; Amingehalt 17.04 mmol N/g) langsam zugegeben, wobei sich die Mischung erwärmte und zunehmend eintrübte. Danach wurden die flüchtigen Bestandteile im Vakuum entfernt (10 mbar, 80 ˚C). Ausbeute: 57.7 g eines klaren, blassgelben Öls mit einem Amingehalt von 2.94 mmol N/g.

**Dialdimin *A-2***

In einem Rundkolben wurden unter Stickstoffatmosphäre 87.0 g (0.31 mol) 2,2-Dimethyl-3-lauroyloxy-propanal vorgelegt. Unter kräftigem Rühren wurden aus einem Eintropftrichter 20.0 g (0.29 mol N) 1,3-Xylylendiamin (Mitsubishi Gas Chemical; Amingehalt 14.56 mmol N/g) langsam zugegeben, wobei sich die Mischung erwärmte und zunehmend eintrübte. Danach wurden die flüchtigen Bestandteile im Vakuum entfernt (10 mbar, 80 ˚C). Ausbeute: 101.0 g eines klaren, blassgelben Öls mit einem Amingehalt von 2.85 mmol N/g.

b) Herstellung von einkomponentigen elastische Scheibenklebstoffen

**Beispiele *1* und *2* und Vergleichsbeispiel *Ref.*:**

Für jedes Beispiel wurden die jeweiligen Bestandteile gemäss Tabelle 1 in den angegebenen Gewichtsteilen in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***PUP-1*** wurde wie folgt hergestellt:

1300 g Polyoxypropylen-Diol (Acclaim® 4200 N, Bayer; OH-Zahl 28.5 mg KOH/g), 2600 g Polyoxypropylenpolyoxyethylen-Triol (Caradol® MD34-02, Shell; OH-Zahl 35.0 mg KOH/g), 600 g 4,4'-Methylendiphenyldiisocyanat (MDI, Desmodur® 44 MC L, Bayer) und 500 g Diisodecylphthalat (DIDP; Palatinol® Z, BASF) wurden bei 80 ˚C zu einem NCO-terminierten Polyurethanpolymeren mit einem Gehalt an freien Isocyanat-Gruppen von 2.01 Gewichts-% umgesetzt.

Das *Verdickungsmittel* wurde wie folgt hergestellt:

In einem Vakuummischer wurden 3000 g Diisodecylphthalat (DIDP; Palatinol® Z, BASF) und 480 g 4,4'-Methylendiphenyldiisocyanat (MDI; Desmo-dur® 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Das Verhältnis zwischen den Isocyanatgruppen und den Aldimino-gruppen in den Beispielen 1 und 2 beträgt 1.00 / 0.75.

Die so erhaltenen einkomponentigen elastischen Klebstoffe wurden auf Applikationseigenschaften, Hautbildungszeit und mechanische Eigenschaften nach der Aushärtung geprüft.

Schubmodule wurden nach DIN 54 451 nach Lagerung nach 7 Tagen Lagerung bei Raumtemperatur und 50% relativer Luftfeuchtigkeit bei der in Tabelle 1 angegebenen Temperatur gemessen. Die hierfür verwendeten Aluminiumsubstrate wurden vor der Verklebung mit Sika® Primer 204, erhältlich bei Sika Schweiz AG, vorbehandelt.

Als Mass für die **Offenzeit** wurde die Hautbildungszeit (Zeit bis zur Klebefreiheit, "tack-free time") herangezogen. Zur Messung der Hautbildungszeit wurde ein der Klebstoff auf bei 40 ˚C aufgewärmt und in einer Schichtdicke von ca. 2 mm auf Pappkarton aufgetragen und bei 23 ˚C und 50% relativer Luftfeuchtigkeit die Zeit bestimmt, die es dauerte, bis beim leichten Antippen der Oberfläche der Zusammensetzung mittels einer Pipette aus LDPE erstmals keine Rückstände

auf der Pipette mehr zurückblieben.

Tabelle 1: Zusammensetzung von einkomponentigen elastischen Scheibenklebstoffen der Beispiele ***1*** und ***2*** sowie des Vergleichsbeispiels ***Ref.***

| | ***Ref.*** | ***1*** | ***2*** |
|---|---|---|---|
| Polyurethanpolymer ***PUP-1*** | 44.0 | 44.0 | 44.0 |
| Dialdimin | -<br>0.0 | ***A-2,***<br>8.0 | ***A-1,***<br>7.8 |
| Flüssiges MDI | 1.3 | 1.3 | 1.3 |
| Weichmacher[a] | 9.5 | 1.5 | 1.6 |
| Russ | 15.0 | 15.0 | 15.0 |
| *Verdickungsmittel* | 10.0 | 10.0 | 10.0 |
| Kaolin | 20.0 | 20.0 | 20.0 |
| Säurekatalysator[b] | - | 0.2 | 0.2 |
| Zinnkatalysator[c] | 0.2 | - | - |
| | | | |
| Hautbildungszeit [min] | 25 | 20-25 | 12-14 |
| Blasenbildung | wenig | keine | keine |
| Schubmodul -20°C | 5.9 MPa | 5.3 MPa | 4.4 MPa |
| Schubmodul 23°C | 3.2 MPa | 3.6 MPa | 3.7 MPa |
| Schubmodul 80°C | 2.5 MPa | 1.5 MPa | 3.4 MPa |
| $\frac{\text{Schubmodul -20°C}}{\text{Schubmodul 23°C}}$ | 1.84 | 1.47 | 1.19 |

[a] Diisodecylphthalat (DIDP; Palatinol® Z, BASF).
[b] Salicylsäure (5 Gew.-% in Dioctyladipat).
[c] 25 Gew.-% Dibutylzinndilaurat in Diisodecylphthalat.

Die Zusammensetzungen **1** und **2** zeigten ausgezeichnete Haftung auf Glas (vorbehandelt durch Sika® Primer-206 G+P) und Lackblechen (vorbehandelt durch Sika®Primer-209 C).

**Patentansprüche**

1. Feuchtigkeitsreaktive Klebstoffzusammensetzung umfassend

a) mindestens ein Dialdimin der Formel (I)

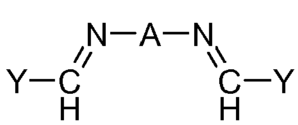

(I)

wobei A für einen zweiwertigen aliphatischen, cycloaliphatischen oder arylaliphatischen Kohlenwasserstoffrest mit 2 bis 15 C-Atomen steht, und Y für den Rest eines Aldehyds nach Entfernung einer O=CH-Gruppe steht; sowie

b) mindestens ein bei Raumtemperatur flüssiges, Isocyanatgruppen aufweisendes Polyurethanpolymer **P1**

**dadurch gekennzeichnet, dass** die Klebstoffzusammensetzung nach 7 Tagen Lagerung bei Raumtemperatur und 50% relativer Luftfeuchtigkeit ein Verhältnis des bei -20˚C gemessenen Schubmoduls zum bei 23˚C gemessenen Schubmodul kleiner als 1.7, insbesondere kleiner als 1.5, bevorzugt kleiner als 1.4, aufweist, wobei die Schubmodule bei den angegebenen Temperaturen nach DIN 54 451 gemessen wurden.

**2.** Feuchtigkeitsreaktive Klebstoffzusammensetzung gemäss Anspruch 1, **dadurch gekennzeichnet**, die Klebstoffzusammensetzung nach 7 Tagen Lagerung bei Raumtemperatur und 50% relativer Luftfeuchtigkeit, bei 80 ˚C ein Schubmodul, gemessen nach DIN 54 451, von mehr als 1 MPa, insbesondere zwischen 1 und 5 MPa, aufweist.

**3.** Feuchtigkeitsreaktive Klebstoffzusammensetzung gemäss Anspruch 1 oder 2, **dadurch gekennzeichnet, dass** die Klebstoffzusammensetzung nach 7 Tagen Lagerung bei Raumtemperatur und 50% relativer Luftfeuchtigkeit bei -20˚C ein Schubmodul, gemessen nach DIN 54 451, von weniger als 6 MPa, vorzugsweise zwischen 4 und 6 MPa, aufweist.

**4.** Feuchtigkeitsreaktive Klebstoffzusammensetzung gemäss einem der vorhergehenden Ansprüche, **dadurch gekennzeichnet, dass** die Klebstoffzusammensetzung nach 7 Tagen Lagerung bei Raumtemperatur und 50% relativer Luftfeuchtigkeit bei 23˚C ein Schubmodul, gemessen nach DIN 54 451, von mehr als 3 MPa, vorzugsweise zwischen 4 und 6 MPa, aufweist.

**5.** Feuchtigkeitsreaktive Klebstoffzusammensetzung gemäss einem der vorhergehenden Ansprüche, **dadurch gekennzeichnet, dass** die Klebstoffzusammensetzung nach 7 Tagen Lagerung bei Raumtemperatur und 50% relativer Luftfeuchtigkeit, bei 80 ˚C ein Schubmodul, gemessen nach DIN 54 451 von mehr als 2, insbesondere von mehr als 3 MPa, bevorzugt zwischen 3 und 5 MPa, aufweist.

**6.** Feuchtigkeitsreaktive Klebstoffzusammensetzung gemäss einem der vorhergehenden Ansprüche, **dadurch gekennzeichnet, dass** die Klebstoffzusammensetzung nach 7 Tagen Lagerung bei Raumtemperatur und 50% relativer Luftfeuchtigkeit, bei 23˚C ein Schubmodul, gemessen nach DIN 54 451, zwischen 3 und 5 MPa, vorzugsweise zwischen 3.5 und 5.5 MPa, aufweist.

**7.** Feuchtigkeitsreaktive Klebstoffzusammensetzung gemäss einem der vorhergehenden Ansprüche, **dadurch gekennzeichnet, dass** A für ein Diamin der Formel (III) nach Entfernung der zwei Aminogruppen steht,

$$H_2N\text{-}A\text{-}NH_2 \qquad (III)$$

**dadurch gekennzeichnet, dass** dieses Diamin der Formel (III) ausgewählt ist aus der Gruppe bestehend aus Ethylendiamin, 1,3-Propandiamin, 1,4-Butandiamin, 1,5-Pentandiamin, 1,6-Hexandiamin, 1,8-Octandiamin, 1,10-Decandiamin, 1,12-Dodecandiamin, 1,3- und 1,4-Diaminocyclohexan, Bis-(4-aminocyclohexyl)-methan, 1,3- und 1,4-Bis-(aminomethyl)-cyclohexan sowie 1,3- und 1,4-Xylylendiamin.

**8.** Feuchtigkeitsreaktive Klebstoffzusammensetzung gemäss einem der vorhergehenden Ansprüche, **dadurch gekennzeichnet, dass** der Rest Y die Formel (II a) oder (II b) aufweist

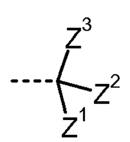

(II a)

$$\text{---}\ Z^4 \qquad (II\ b)$$

wobei

$Z^1$ und $Z^2$ entweder
unabhängig voneinander jeweils für einen einwertigen Kohlenwasserstoffrest mit 1 bis 12 C-Atomen stehen, oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen; und
$Z^3$ entweder

für eine verzweigte oder unverzweigte Alkyl-, Cycloalkyl-, Alkylen- oder Cycloalkylengruppe steht, oder für eine substituierte oder unsubstituierte Aryl- oder Arylalkylgruppe steht, oder für einen Rest der Formel O-$R^2$ oder

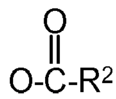 oder 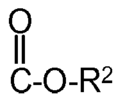

oder

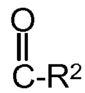

steht, wobei $R^2$ für eine Aryl-, Arylalkyl- oder Alkylgruppe steht und jeweils substituiert oder unsubstituiert ist, insbesondere für eine Aryl-, Arylalkyl- oder Alkylgruppe mit 1 bis 32 C-Atomen steht, welche, gegebenenfalls Ethersauerstoffatome enthält, oder für einen Rest der Formel (VI) steht,

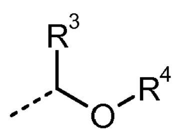 (VI)

wobei

$R^3$ für ein Wasserstoffatom oder für eine Alkyl- oder Arylalkylgruppe, bevorzugt für ein Wasserstoffatom, steht, und
$R^4$ entweder für einen Kohlenwasserstoffrest mit 1 bis 30 C-Atomen, der gegebenenfalls Ethersauerstoffatome enthält, steht, oder für einen Rest

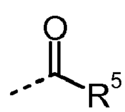

steht, wobei $R^5$ für ein Wasserstoffatom oder für einen Kohlenwasserstoffrest mit 1 bis 20, insbesondere 1 bis 5, C-Atomen steht;

$Z^4$ entweder für eine substituierte oder unsubstituierte Aryl- oder Heteroaryl-Gruppe, welche eine Ringgrösse von 5 bis 8, bevorzugt 6, Atomen aufweist, steht, oder für

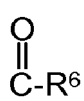

steht, wobei $R^6$

für ein Wasserstoffatom oder für eine Alkoxygruppe steht, oder für eine substituierte oder unsubstituierte Alkenyl- oder Arylalkenylgruppe mit mindestens 6 C-Atomen steht.

**9.** Feuchtigkeitsreaktive Klebstoffzusammensetzung gemäss einem der vorhergehenden Ansprüche, **dadurch gekennzeichnet, dass** der Aldehyd, aus dem sich der Rest Y ableitet, die Formel (V a) aufweist

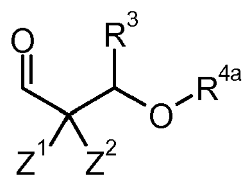

(V a)

wobei

$Z^1$ und $Z^2$ entweder
unabhängig voneinander jeweils für einen einwertigen Kohlenwasserstoffrest mit 1 bis 12 C-Atomen stehen, oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
$R^3$ für ein Wasserstoffatom oder für eine Alkyl- oder Arylalkylgruppe, bevorzugt für ein Wasserstoffatom, steht; und
$R^{4a}$ für einen Kohlenwasserstoffrest mit 1 bis 30 C-Atomen, insbesondere 11 bis 30 C-Atomen, der gegebenenfalls Ethersauerstoffatome enthält, steht;

**10.** Feuchtigkeitsreaktive Klebstoffzusammensetzung gemäss einem der Ansprüche 1 bis 8, **dadurch gekennzeichnet, dass** der Aldehyd, aus dem sich der Rest Y ableitet, die Formel (V b) aufweist

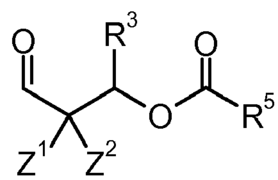

(V b)

wobei

$Z^1$ und $Z^2$ entweder
unabhängig voneinander jeweils für einen einwertigen Kohlenwasserstoffrest mit 1 bis 12 C-Atomen stehen, oder
zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
$R^3$ für ein Wasserstoffatom oder für eine Alkyl- oder Arylalkylgruppe, bevorzugt für ein Wasserstoffatom, steht; und
$R^5$ für ein Wasserstoffatom oder für einen Kohlenwasserstoffrest mit 1 bis 20, insbesondere 1 bis 5, C-Atomen steht.

**11.** Feuchtigkeitsreaktive Klebstoffzusammensetzung gemäss einem der vorhergehenden Ansprüche, **dadurch gekennzeichnet, dass** die Klebstoffzusammensetzung eine mehrere Polyurethanpolymere **P1** aufweist, wobei vorzugsweise eines auf einem Polyol mit einem Molekulargewicht unter 2000 g/mol basiert.

**12.** Feuchtigkeitsreaktive Klebstoffzusammensetzung gemäss Anspruch 11, **dadurch gekennzeichnet, dass** die Klebstoffzusammensetzung ein auf Polyetherpolyol basierendes Polyurethanpolymer **P1** und ein auf Polycarbonatpolyol basierendes Polyurethanpolymer **P1** aufweist.

**13.** Feuchtigkeitsreaktive Klebstoffzusammensetzung gemäss einem der vorhergehenden Ansprüche, **dadurch ge-**

**kennzeichnet, dass** die Klebstoffzusammensetzung zusätzlich mindestens ein bei Raumtemperatur festes, Isocyanatgruppen aufweisenden Polyurethanpolymer **P2** aufweist.

**14.** Feuchtigkeitsreaktive Klebstoffzusammensetzung gemäss Anspruch 13,
**dadurch gekennzeichnet, dass** das bei Raumtemperatur feste Polyurethanpolymer **P2** aus Polyesterpolyolen und/oder Polycarbonatpolyolen hergestellt wird.

**15.** Feuchtigkeitsreaktive Klebstoffzusammensetzung gemäss einem der vorhergehenden Ansprüche, **dadurch gekennzeichnet, dass** der Anteil des Dialdimines der Formel (I) in der Zusammensetzung so gewählt ist, dass das Verhältnis der Anzahl Aldimino-Gruppen zur Anzahl der NCO-Gruppen in der Zusammensetzung 0.5 - < 1, bevorzugt mindestens 0.6 - 0.8, meist bevorzugt 0.65 - 0.75, beträgt.

**16.** Verwendung einer feuchtigkeitsreaktiven Klebstoffzusammensetzung gemäss einem der Ansprüche 1 bis 15 zur Verklebung von Scheiben im Transportmittelbau, insbesondere im Automobilbau.

**17.** Verwendung eines Dialdimines der Formel (I), wie es in einer Zusammensetzung gemäss einem der Ansprüche 1 bis 15 offenbart wird, zur Reduktion der Temperaturabhängigkeit des Schubmoduls gemäss DIN 54 451 von feuchtigkeitsreaktiven Polyurethanklebstoffen.

**18.** Verklebter Artikel, welcher durch ein Verkleben von zwei Substraten **S1** und **S2** durch eine feuchtigkeitsreaktive Klebstoffzusammensetzung gemäss einem der Ansprüche 1 bis 15 und der Härtung der Klebstoffzusammensetzung durch Feuchtigkeit erhalten wird.

**19.** Verklebter Artikel gemäss Anspruch 18, **dadurch gekennzeichnet, dass** das Substrat **S1** eine Scheibe, insbesondere eine Glasscheibe, und das Substrat **S2** ein Metall, insbesondere ein lackiertes Metall, ist.

Europäisches Patentamt

# EUROPÄISCHER RECHERCHENBERICHT

Nummer der Anmeldung
EP 07 11 6117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/037885 A (SIKA TECHNOLOGY AG [CH]; BURCKHARDT URS [CH]; KISLIG STEFAN [CH]) 28. April 2005 (2005-04-28) * Beispiel 24 * | 1-19 | INV. C08G18/12 C08G18/28 C08G18/48 C08G18/76 C09J175/00 |
| X | EP 1 770 107 A (SIKA TECHNOLOGY AG [CH]) 4. April 2007 (2007-04-04) * Beispiele 15,18 * | 1-19 | |
| X | WO 03/059978 A (SIKA TECHNOLOGY AG [CH]; BURCKHARDT URS [CH]; STADELMANN URSULA [CH];) 24. Juli 2003 (2003-07-24) * Beispiel 15 * | 1-19 | |
| X | JP 10 139849 A (TOYO POLYMER KK) 26. Mai 1998 (1998-05-26) * Absätze [0014], [0016] * | 1-19 | |
| X | JP 08 302960 A (MITSUI TOATSU CHEMICALS) 19. November 1996 (1996-11-19) * Beispiel 1 * | 1-19 | **RECHERCHIERTE SACHGEBIETE (IPC)** |
| X | EP 0 469 751 A (MITSUI TOATSU CHEMICALS [JP]) 5. Februar 1992 (1992-02-05) * Beispiel 1 * | 1-19 | C08G C09J |
| X | WO 99/16619 A (ASHLAND INC [US]) 8. April 1999 (1999-04-08) * Beispiel 10 * | 1-19 | |
| X | DE 31 33 769 A1 (BASF AG [DE]) 10. März 1983 (1983-03-10) * Beispiel 1 * | 1-19 | |
| X | US 3 426 097 A (ILKKA GUST A ET AL) 4. Februar 1969 (1969-02-04) * Beispiel II * | 1-19 | |
| | -/-- | | |

Der vorliegende Recherchenbericht wurde für alle Patentansprüche erstellt

1

| Recherchenort | Abschlußdatum der Recherche | Prüfer |
|---|---|---|
| München | 13. Dezember 2007 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 07 11 6117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 527 568 A (ICI PLC [GB]) 17. Februar 1993 (1993-02-17) * Beispiel 3 * ----- | 1-19 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 13. Dezember 2007 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

1
EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 07 11 6117

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2007

| Im Recherchenbericht angeführtes Patentdokument | Datum der Veröffentlichung | Mitglied(er) der Patentfamilie | Datum der Veröffentlichung |
|---|---|---|---|
| WO 2005037885 A | 28-04-2005 | BR PI0415367 A | 12-12-2006 |
| | | CA 2551404 A1 | 28-04-2005 |
| | | CN 1882627 A | 20-12-2006 |
| | | EP 1524282 A1 | 20-04-2005 |
| | | JP 2007509200 T | 12-04-2007 |
| | | US 2007129522 A1 | 07-06-2007 |
| EP 1770107 A | 04-04-2007 | WO 2007036574 A1 | 05-04-2007 |
| | | WO 2007036575 A1 | 05-04-2007 |
| WO 03059978 A | 24-07-2003 | AU 2003235705 A1 | 30-07-2003 |
| | | CA 2473437 A1 | 24-07-2003 |
| | | CN 1610709 A | 27-04-2005 |
| | | JP 2005514503 T | 19-05-2005 |
| | | US 2007004893 A1 | 04-01-2007 |
| | | US 2006052522 A1 | 09-03-2006 |
| JP 10139849 A | 26-05-1998 | KEINE | |
| JP 8302960 A | 19-11-1996 | KEINE | |
| EP 0469751 A | 05-02-1992 | DE 69109762 D1 | 22-06-1995 |
| | | DE 69109762 T2 | 21-12-1995 |
| | | US 5087661 A | 11-02-1992 |
| WO 9916619 A | 08-04-1999 | AU 8921498 A | 23-04-1999 |
| | | US 5955199 A | 21-09-1999 |
| DE 3133769 A1 | 10-03-1983 | KEINE | |
| US 3426097 A | 04-02-1969 | KEINE | |
| EP 0527568 A | 17-02-1993 | AU 655293 B2 | 15-12-1994 |
| | | AU 2039392 A | 11-02-1993 |
| | | CA 2075457 A1 | 09-02-1993 |
| | | CN 1069282 A | 24-02-1993 |
| | | DE 69213613 D1 | 17-10-1996 |
| | | DE 69213613 T2 | 20-02-1997 |
| | | ES 2091412 T3 | 01-11-1996 |
| | | HK 1001689 A1 | 03-07-1998 |
| | | JP 5247430 A | 24-09-1993 |
| | | US 5981683 A | 09-11-1999 |
| | | ZA 9205561 A | 03-05-1993 |

EPO FORM P0461

Für nähere Einzelheiten zu diesem Anhang : siehe Amtsblatt des Europäischen Patentamts, Nr.12/82